# EUROPÄISCHE PATENTSCHRIFT

(11) **EP 1 317 867 B1**
(45) Veröffentlichungstag und Bekanntmachung des Hinweises auf die Patenterteilung: **18.08.2004**
(21) Anmeldenummer: 01969271.4
(22) Anmeldetag: 07.09.2001
(51) Int. Cl.: H04Q 9/00

(54) **SERVER FÜR FERNABLESUNG VON VERBRAUCHSZÄHLERN**
SERVER FOR THE REMOTE READING OF CONSUMPTION METERS
SERVEUR POUR RELEVE A DISTANCE DE COMPTEURS DE CONSOMMATION

(30) Priorität: 11.09.2000 DE 10045000; 23.10.2000 DE 10052491
(43) Veröffentlichungstag der Anmeldung: 11.06.2003
(73) Patentinhaber: Zenner GmbH & Co. KGaA, 66121 Saarbrücken (DE)
(72) Erfinder: SCHÜSSLER, Gerhard, 66333 Völklingen (DE)
(74) Vertreter: Vièl, Christof, Dipl.-Ing.
(86) Internationale Anmeldenummer: PCT/DE2001/003434
(87) Internationale Veröffentlichungsnummer: WO 2002/021876

(56) Entgegenhaltungen:
- EP-A- 0 248 137
- WO-A-98/56138
- GB-A- 2 335 523

## Beschreibung

Die Erfindung betrifft eine Vorrichtung zur Fernabfrage von Verbrauchsdaten von Strom-, Wärme-, Wasser-, Gaszählern und dergleichen, bestehend aus einem Zähler und einem Server, der über eine Tastatur bedienbar ist und ein Verfahren zum Erfassen von Verbrauchsdaten von Strom-, Wärme-, Wasser-, Gaszählern und dergleichen.

Server sind bekannt, beispielsweise in Form von Telefonservern. Mit tonwahlfähigen Telefonen können Anrufe durch Auswahl unter verschiedenen vorgeschlagenen Menüpunkten zu dem jeweils zuständigen Sachbearbeiter geleitet bzw. die jeweils gesuchte Auskunft erhalten. Server bringen den Vorteil mit sich, daß sie ohne Zwischenschaltung von Personal große Mengen von Anrufen in kurzer Zeit bearbeiten bzw. zu der jeweils zuständigen Person leiten können. Derartige Server können auch Computerserver sein, die beispielsweise über das Internet benutzt werden.

Das Ablesen von Verbrauchszählem für Strom-, Wärme-, Wasser-, Gas und dergleichen erfolgt in der Regel durch Ablespersonal, das in jedem Haus einer Straße die Zählerstände der Verbrauchszähler erfaßt und zur Auswertung weiterleitet. Dies ist insofern aufwendig, als die jeweils betroffenen Einwohner informiert werden müssen bzw. bei deren Abwesenheit das Ablespersonal erneut einen Termin vereinbaren muß. Zudem kann es aufgrund von Irrtümern des Ablespersonals zu einer falschen Zuordnung zwischen dem Verbrauchszähler und dem jeweiligen Rechnungsampfänger kommen. Weiterhin besteht durch die mehrfache manuelle Übertragung der erfaßten Zählerstände die Gefahr von Übertragungsfehlem. Schließlich ist nicht auszuschließen, daß es z.B. durch korruptes Ablespersonal zu bewußten Falschablesungen kommt. Der personelle Aufwand ist somit erheblich und eine erhebliche Fehlerquote, die das Vertrauen des Rechnungsempfängers in den Rechnungssteller erschüttert, ist praktisch unvermeidbar.

Es besteht die Möglichkeit, daß das Ablesen der Zählerstände von Verbrauchszählern durch ein Mitglied des jeweiligen Haushaltes erfolgt und die Zählerstände schriftlich, beispielsweise mit dafür vorgesehenen Postkarten, an die Auswertestelle übermittelt werden. Jedoch besteht auch hier die Gefahr von bewußten und unbewußten Übertragungsfehlern. Zudem ist dies mit relativ hohen Postgebühren verbunden und die Archivierung der schriftlichen Meldungen ist zeitund platzaufwendig.

Aus der EP 0 248 137 A1 ist ein Verfahren zum Erfassen des Strombedarfs von Verbrauchern, bei dem mittels eines Impulsauslösers, der die Drehung der Wirbelscheibe eines Wattstundenzählers erfaßt und dessen Frequenz der augenblicklich von dem Kunden verbrauchten Energiemenge entspricht. Neben dem Impulszählwert von Intervallen von beispielsweise 15 Minuten wird am Ende einer Aufzeichnungsintervalls auch eine codierte Darstellung der laufenden Zählerregisterablesungen gespeichert, d.h. der durch das laufende Aufzeichnungsintervall aufgespeicherte Energiebedarf. Mit den Intervallimpulszählwerten und den kodierten Registerablesungen können die in einer Aufzeichnung aufgelaufenen Intervallzählimpulse auf ihre Richtigkeit überprüft werden, indem die Gesamtanzahl von Zählwerten über eine Meßperiode mit den kodierten Registerablesungen verglichen werden. Diese Vorrichtung erfordert allerdings das Speichern und Übertragen sowohl der Intervallimpulszählwerte als auch der kodierten Registerablesung am Ende einer jeden Zählperiode und bringt somit einen relativ großen apparativen Aufwand mit sich. Für das Erfassen von Verbrauchswerten bezüglich Fluiden, wie Wasser und Gas ist dieses Verfahren ohnehin ungeeignet, da dort nur die Registerablesung am Ende einer jeden Zählperiode vorliegt.

Die W098/56138 A1 beschreibt ein Verfahren zum Übertragen von Verbrauchsdaten an ein Energieversorgungsunternehmen, bei dem die Verbrauchsdaten mittels eines Mikroprozessors verschlüsselt und dann an das Energieversorgungsunternehmen übertragen werden. Allerdings erfordert diese Vorgehensweise einen Mikroprozessor und hat darüber hinaus den Nachteil, daß der Verbraucher erkennt, daß es sich um verschlüsselte Angaben handelt.

Aufgabe der Erfindung ist es somit, eine Vorrichtung zu schaffen, mit der eine zuverlässige und dennoch kostengünstige Erfassung von Zählerständen möglich ist.

Diese Aufgabe wird erfindungsgemäß dadurch gelöst, daß der Zähler neben der Anzeige der Verbrauchsdaten ein Anzeigefeld für einen Kontrollcode aufweist, der in einem festgelegten Übersetzungsverhältnis an die Anzeige der Verbrauchsdaten gekoppelt ist, daß der Server Mittel zur Abfrage der Verbrauchsdaten des Zählers und Mittel zur Abfrage des Kontrollcodes aufweist, und daß der Server Mittel zum Prüfen der Korrelation zwischen den abgefragten Verbrauchsdaten und dem Kontrollcode aufweist.

Der Kontrollcode kann beispielsweise dadurch erzeugt werden, daß der Zähler neben den Verbrauchsdaten ein Anzeigefeld (mit einer oder mehreren Zahlen, Buchstaben, etc.) aufweist, das immer in einer definierten Korrelation zu den jeweils angezeigten Verbrauchsdaten steht, z.B. in einem festgelegten Übersetzungsverhältnis an die Anzeige der Verbrauchsdaten gekoppelt ist. Ist der Kontrollcode bei einer bestimmten Zählerstellung bekannt, kann jeweils den angezeigten Verbrauchsdaten der zutreffende Kontrollcode zugeordnet werden.

Dadurch, daß über den Kontrollcode eine Überprüfung des übermittelten Zählerstandes auf einfache Weise möglich ist, wird eine fehlerfreie Erfassung der Zählerstände ermöglicht. Es wird kein Ablespersonal mehr benötigt und die abgelesenen Verbrauchsdaten müssen nicht mehr manuell übertragen werden. Auch können die Kosten für Postkarten und Porto vermieden werden, da die Übermittlung an den Server häufig sehr kostengünstig oder kostenlos über das Telefonnetz erfolgen kann. Somit könnnen erhebliche Kosten eingespart und an den Verbraucher weitergegeben werden.

Eine Weiterbildung der Erfindung besteht darin, daß der Server bei einer zutreffenden Korrelation zwischen den Verbrauchsdaten und dem Kontrollcode die abgefragten Verbrauchsdaten zur Verbrauchsabrechnung zuläßt und andernfalls zu einer erneuten Eingabe von Verbrauchsdaten auffordert. Auf diese Weise erfolgt während der Abfrage der Verbrauchsdaten eine Überprüfung der Daten auf Plausibilität und der Server kann sofort über die Annahme oder Zurückweisung der übermittelten Daten entscheiden.

Eine Ausbildung der Erfindung besteht darin, daß der Server zusätzlich Mittel zum Abfragen einer Zählernummer aufweist.

Die Zählernummer kann einerseits zur Identifikation des jeweiligen Haushaltes benutzt werden und langwierige Eingaben ersparen. Zudem kann sie zum Prüfen der Korrelation zwischen den abgefragten Verbrauchsdaten und dem Kontrollcode verwendet werden.

Hierbei ist es zweckmäßig, daß die Zählernummer mit dem Kontrollcode in einer definierten Stellung des Zählers korreliert und in den Mitteln zum Prüfen der Korrelation zwischen den abgefragten Verbrauchsdaten und dem Kontrollcode verwendbar ist.

Im Rahmen der Erfindung liegt auch, daß der Server zusätzlich Mittel zum Abfragen einer Kundennummer aufweist.

Eine Weiterbildung der Erfindung besteht darin, daß mittels der Zählernummer oder der Kundennummer die früheren Verbrauchsdaten des Zählers abrufbar sind und für eine zusätzliche Plausibilitätskontrolle der Verbrauchsdaten verwendbar sind.

Beispielsweise können Zählerstände zurückgewiesen werden, die unterhalb der Zählerstände bei der vorangegangenen Erfassung liegen. Weiterhin kann eine statistische Auswertung erfolgen und bei signifikanten Abweichungen von dem bisherigen Verbrauchsprofil eine Überprüfung veranlaßt werden.

Es ist erfindungsgemäß, daß der Server ein Telefonserver ist, wobei die Eingabe über die Tastatur eines tonwahlfähigen Telefons erfolgt.

Telefonserver haben gegenüber Computerservern derzeit den Vorteil, daß in Privathaushalten Telefone weiter verbreitet sind als Computer und daß sie auch für im Umgang mit Computern ungeübte Personen bedienbar sind.

Es kann auch zweckmäßig sein, daß die Eingabe über die Tastatur eines Mobiltelefons erfolgt.

Über moderne Mobiltelefone, wie z.B. WAP- oder UMTS-Mobiltelefone kann schnell auf das Internet zugegriffen werden und ein Datenaustausch erfolgen. Nach Zugriff auf die Internetseite des Versorgungsunternehmens wird der Benutzer nach Eingabe seiner Kundennummer (sowie eventuell weiterer Schlüssel) durch ein Eingabemenü seiner Selbstableserseite geführt, in der die auf ihn laufenden Zähler mit Zählernummern und Zählertyp (Kaltwasser, Warmwasser, Strom, Gas, EHKV) aufgeführt sind. Er braucht dann nur über das Mobiltelefon seine Verbrauchsdaten mit der jeweiligen Prüfzahl einzugeben. Der Telefonserver greift auf die jeweiligen Kundendaten zu und überträgt die vom Kunden eingegebenen Verbrauchsdaten in die Datenbank.

Alternativ ist es auch möglich, daß der Server ein Computerserver ist und daß die Eingabe über die Tastatur eines mit dem Computerserver verbundenen Computers erfolgt.

Hier kann per Computer auf die Internetseite des Versorgungsunternehmens zugegriffen werden und nach Eingabe einer Kundennummer (sowie eventuell weiterer Schlüssel) die Verbrauchsdaten sowie der jeweils entsprechende Kontrollcode eingegeben werden.

Im Rahmen der Erfindung liegt auch ein Verfahren zum Erfassen von Verbrauchsdaten von Strom-, Wärme-, Wasser-, Gaszählern und dergleichen, gekennzeichnet durch folgende Verfahrensschritte:
- Abfragen von Verbrauchsdaten von Strom-, Wärme-, Wasser-, Gaszählern und dergleichen durch einen Server
- Abfragen eines Kontrollcodes, der in einem festgelegten Übersetzungsverhältnis zu den jeweils angezeigten Verbrauchsdaten steht, durch den Server,
- Prüfen der Korrelation zwischen den abgefragten Verbrauchsdaten und dem Kontrollcode durch den Server,
- Zulassen der Verbrauchsdaten zur Rechnungserstellung oder Zurückweisen der Verbrauchsdaten in Abhängigkeit von dem Ergebnis der Korrelationsprüfung.

Die Vorteile der Erfindung bestehen im wesentlichen darin, daß ein extrem zuverlässiges Erfassungsverfahren für Verbrauchsdaten von Verbrauchszählem geschaffen wird, das dennoch wesentlich kostengünstiger betreibbar ist als bekannte Verfahren.

Im folgenden wird ein Ausführungsbeispiel der Erfindung anhand von Zeichnungen erläutert.

Es zeigen
- Fig. 1: einen erfindungsgemäßen Warmwasserzähler,

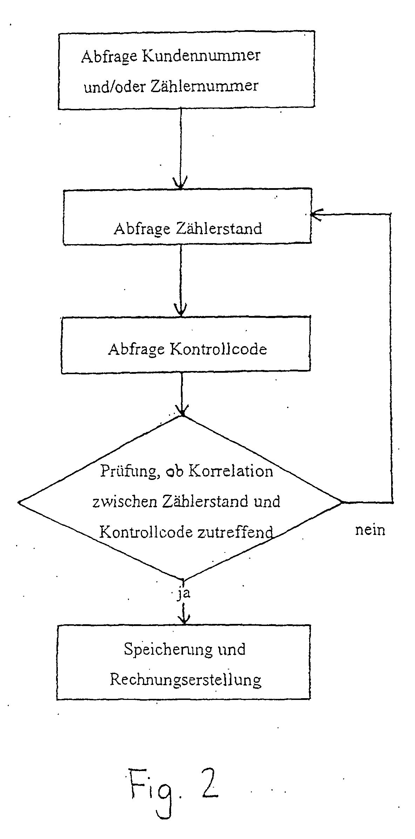

- Fig. 2: eine schematische Darstellung des erfindungsgemäßen Verfahrens.

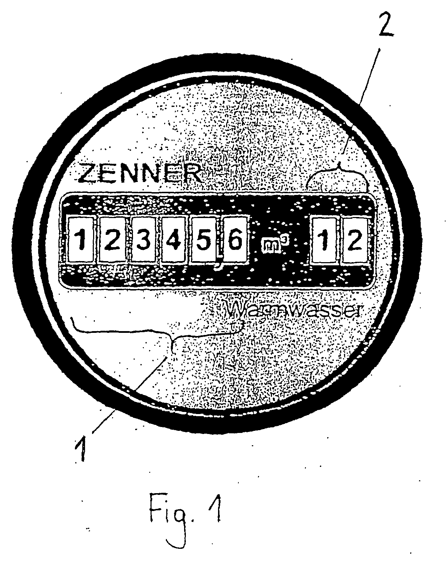

Der erfindungsgemäße Wasserzähler gemäß Fig. 1 weist nicht nur die Angabe der jeweiligen Verbrauchsdaten 1 ("Zählerstand") auf, sondern auch einen Kontrollcode 2, der in Korrelation zu den jeweiligen Verbrauchsdaten 1 steht. Dies bedeutet, daß jedem Zählerstand 1 ein Kontrollcode 2 zugeordnet ist, wobei die jeweilige Korrelation dem Zählerhersteller bekannt ist.

Bei der Erfassung der Verbrauchsdaten wird einerseits der jeweilige Zähler identifiziert, z.B. durch eine Zählernummer, eine Kundennummer, Angaben zur Person des jeweiligen Haushaltsvorstandes, etc. und andererseits wird der derzeitige Zählerstand 1 erfaßt. Nach Überprüfung der Korrelation zwischen dem übermittelten Kontrollcode 2 und dem Zählerstand 1 werden die erfaßten Verbrauchsdaten entweder zur Rechnungserstellung zugelassen und weitergeleitet bzw. gespeichert oder aber verworfen und es erfolgt eine erneute Eingabeaufforderung.

Zusätzlich kann eine Überprüfung der ermittelten Verbrauchsdaten dahingehend erfolgen, daß die Verbrauchsdaten vergangener Zeiträume statistisch ausgewertet werden und unmögliche Zählerstände (z.B. geringerer Zählerstand als bei der vorhergehenden Ablesung) verworfen werden bzw. auffällige Zählerstände (plötzlicher Verbrauchsanstieg oder -abfall) einer Überprüfung unterzogen werden.

Die Eingabe der Verbrauchsdaten kann auf verschiedene Weise erfolgen:
1. Durch einen Telefonserver, der von dem Verbraucher angewählt wird und der die verschiedenen Angaben (Kundennummer, Zählernummer, Verbrauchsdaten, Kontrollcode, etc.) abfragt.
2. Durch ein modernes Mobiltelefon (z.B. ein WAP- oder UMTS-Mobiltelefon), das die Eingangsseite des Telefonservers öffnet und nach Eingabe der Kundennummer (und gegebenenfalls weiterer Schlüssel) auf einer Selbstableserseite die Eingabe der verschiedenen Angaben ermöglicht. Der Telefonserver greift auf die jeweiligen Kundendaten zu und überträgt die aufgenommenen Verbrauchsdaten in die Datenbank, wo sie zur Auswertung zur Verfügung stehen.
3. Durch einen Computer, der mit dem Server z.B. durch ein Datennetz, wie das Internet, verbunden ist.

## Patentansprüche

1. Vorrichtung zur Fernabfrage von Verbrauchsdaten (1) von Strom-, Wärme-, Wasser-, Gaszählern und dergleichen, bestehend aus einem Zähler und einem Server, der über eine Tastatur bedienbar ist, **dadurch gekennzeichnet, daß** der Zähler neben der Anzeige der Verbrauchsdaten ein Anzeigefeld für einen Kontrollcode aufweist, der in einem festgelegten Übersetzungsverhältnis an die Anzeige der Verbrauchsdaten gekoppelt ist, daß der Server Mittel zur Abfrage der Verbrauchsdaten des Zählers und Mittel zur Abfrage des Kontrollcodes (2) aufweist, und daß der Server Mittel zum Prüfen der Korrelation zwischen den abgefragten Verbrauchsdaten (1) und dem Kontrollcode (2) aufweist.

2. Vorrichtung gemäß Anspruch 1, **dadurch gekennzeichnet, daß** der Server bei einer zutreffenden Korrelation zwischen den Verbrauchsdaten (1) und dem Kontrollcode (2) die abgefragten Verbrauchsdaten zur Verbrauchsabrechnung zuläßt und andernfalls zu einer erneuten Eingabe von Verbrauchsdaten auffordert.

3. Vorrichtung gemäß Anspruch 1, **dadurch gekennzeichnet, daß** der Server zusätzlich Mittel zum Abfragen einer Zählemummer aufweist.

4. Vorrichtung gemäß Anspruch 3, **dadurch gekennzeichnet, daß** die Zählernummer mit dem Kontrollcode (2) in einer definierten Stellung des Zählers korreliert und in den Mitteln zum Prüfen der Korrelation zwischen den abgefragten Verbrauchsdaten (1) und dem Kontrolicode (2) verwendbar ist.

5. Vorrichtung gemäß Anspruch 1, **dadurch gekennzeichnet, daß** der Server zusätzlich Mittel zum Abfragen einer Kundennummer aufweist.

6. Vorrichtung gemäß Anspruch 3 oder 5, **dadurch gekennzeichnet, daß** mittels der Zählernummer oder der Kundennummer die früheren Verbrauchsdaten des Zählers abrufbar sind und für eine zusätzliche Plausibilitätskontrolle der Verbrauchsdaten verwendbar sind.

7. Vorrichtung gemäß einem der Ansprüche 1 bis 6, **dadurch gekennzeichnet, daß** der Server ein Telefonserver ist, wobei die Eingabe über die Tastatur eines tonwahlfähigen Telefons erfolgt.

8. Vorrichtung gemäß Anspruch 7, **dadurch gekennzeichnet, daß** die Eingabe über die Tastatur eines Mobiltelefons erfolgt.

9. Vorrichtung gemäß einem der Ansprüche 1 bis 6, **dadurch gekennzeichnet, daß** der Server ein Computerserver ist und daß die Eingabe über die Tastatur eines mit dem Computerserver verbundenen Computers erfolgt.

10. Verfahren zum Erfassen von Verbrauchsdaten von Strom-, Wärme-, Wasser-, Gaszählern und dergleichen, **gekennzeichnet durch** folgende Verfahrensschritte:
• Abfragen von Verbrauchsdaten (1) von Strom-, Wärme-, Wasser-, Gaszählern und dergleichen **durch** einen Server
• Abfragen eines Kontrollcodes (2), der in einem festgelegten Übersetzungsverhältnis zu den jeweils angezeigten Verbrauchsdaten steht, **durch** den Server,
• Prüfen der Korrelation zwischen den abgefragten Verbrauchsdaten (1) und dem Kontrollcode (2) **durch** den Server,
• Zulassen der Verbrauchsdaten zur Rechnungserstellung oder Zurückweisen der Verbrauchsdaten in Abhängigkeit von dem Ergebnis der Korrelationsprüfung.

## Claims

1. A device for remote requesting of consumption data (1) recorded by electricity, heating, water and gas meters, etc., which device consists of a meter and a server operable via a keypad or keyboard, **characterised in that** besides the consumption data display, the meter has a display window for a check code which is coupled to the consumption data display in a predefined transformation ratio, that the server has means for requesting the meter consumption data (1) and means for requesting the check code (2) and that the server has means for testing the correlation between the requested consumption data (1) and the check code (2).

2. The device of claim 1, **characterised in that** the server permits the requested consumption data to be used for billing if the correlation between the consumption data (1) and the check code (2) is correct, and if it is not, requests the renewed input of consumption data.

3. The device of claim 1, **characterised in that** the server additionally has means for requesting a meter number.

4. The device of claim 3, **characterised in that**, for a given meter reading, the meter number correlates with the check code (2) and can be used in the means for testing the correlation between the requested consumption data (1) and the check code (2).

5. The device of claim 1, **characterised in that** the server additionally has means for requesting a customer number.

6. The device according to claim 3 or 5, **characterised in that** earlier meter consumption data can be requested by means of the meter number or the customer number, and can be used for an additional plausibility check of the consumption data.

7. The device according to one of claims 1 to 6, **characterised in that** the server is a telephone server, with data input being effected via the keypad of an inband-signalling enabled telephone.

8. The device of claim 7, **characterised in that** input is effected via the keypad of a mobile telephone.

9. The device according to one of claims 1 to 6, **characterised in that** the server is a computer server and that input is effected via the keyboard of a computer connected up to the computer server.

10. A method of collecting consumption data recorded by electricity, heating, water and gas meters, etc. **characterised by** the following steps:
• Request by a server for consumption data (1) recorded by electricity, heating, water and gas meters, etc.,
• Request by the server for a check code (2) that is coupled in a specified transformation ratio with the consumption data displayed at any one time,
• Testing of correlation between the requested consumption data (1) and the check code (2) by the server.
• Approval of the consumption data for billing, or rejection of the consumption data, depending on the result of the correlation test.

## Revendications

1. Dispositif pour l'interrogation à distance de données de consommation (1) de compteurs de courant, de chaleur, d'eau, de gaz ou de compteurs similaires, se composant d'un compteur et d'un serveur pouvant être piloté au moyen d'un clavier, **caractérisé en ce qu**'outre l'affichage des données de consommation, le compteur est muni d'un champ d'affichage pour un code de contrôle qui est couplé dans un rapport de multiplication fixé à l'affichage des données de consommation, en ce que le serveur est muni de moyens pour l'interrogation des données de consommation du compteur et de moyens pour l'interrogation du code de contrôle (2), et en ce que le serveur est muni de moyens pour contrôler la corrélation entre les données de consommation (1) et le code de contrôle (2).

2. Dispositif selon la revendication 1, **caractérisé en ce que** le serveur, en cas de corrélation effective entre les données de consommation (1) et le code de contrôle (2), libère les données de consommation interrogées pour la facturation de consommation et dans le cas contraire exige une nouvelle entrée des données de consommation.

3. Dispositif selon la revendication 1, **caractérisé en ce que** le serveur est muni de moyens supplémentaires pour l'interrogation d'un numéro de compteur.

4. Dispositif selon la revendication 3, **caractérisé en ce que** le numéro de compteur est en corrélation avec le code de contrôle (2) dans une position définie du compteur et peut être utilisé dans les moyens pour contrôler la corrélation entre les données de consommation interrogées (1 ) et le code de contrôle (2).

5. Dispositif selon la revendication 1, **caractérisé en ce que** le serveur est muni en outre de moyens pour interroger un numéro de client.

6. Dispositif selon la revendication 3 ou 5, **caractérisé en ce que** les données de consommation précédentes peuvent être rappelées au moyen du numéro de compteur ou du numéro de client et peuvent être utilisées pour un contrôle de crédibilité supplémentaire des données de consommation.

7. Dispositif selon l'une des revendications 1 à 6, **caractérisé en ce que** le serveur est un serveur téléphonique, la saisie se faisant par le clavier d'un téléphone à fréquence vocale.

8. Dispositif selon la revendication 7, **caractérisé en ce que** la saisie est réalisée au moyen d'un téléphone mobile.

9. Dispositif selon l'une des revendications 1 à 6, **caractérisé en ce que** le serveur est un serveur d'ordinateur et **en ce que** la saisie se fait par l'intermédiaire du clavier d'un ordinateur relié au serveur d'ordinateur.

10. Procédé pour la saisie de données de consommation de compteurs de courant, de chaleur, d'eau, de gaz ou de compteurs similaires, **caractérisé par** les étapes de procédé suivantes :
• Interrogation par un serveur des données de consommation (1) des compteurs de courant, de chaleur, d'eau, de gaz ou des compteurs similaires,
• Interrogation par le serveur d'un code de contrôle (2) se trouvant dans un rapport de multiplication fixé avec les données de consommation affichées correspondantes,
• Contrôle par le serveur de la corrélation entre les données de consommation interrogées (1) et le code de contrôle (2),
• Libération des données de consommation en vue de l'édition de la facture ou refus des données de consommation en fonction du résultat du contrôle de corrélation.
